# EUROPEAN PATENT APPLICATION

(11) **EP 2 824 989 A1**
(43) Date of publication of application: **14.01.2015**
(21) Application number: 13757296.2
(22) Date of filing: 17.01.2013
(51) Int. Cl.: H04W 76/06, H04M 3/00

(54) **COMMUNICATION SYSTEM, MOBILITY MANAGEMENT ENTITY, BASE STATION, AND COMMUNICATION METHOD**

(30) Priority: 07.03.2012 JP 2012050160
(71) Applicant: NTT Docomo, Inc., Tokyo 100-6150 (JP)
(72) Inventor: SASAKI, Yusuke, Tokyo 100-6150 (JP); OBATA, Kazunori, Tokyo 100-6150 (JP); HARANO, Seigo, Tokyo 100-6150 (JP); YABUKI, Shogo, Tokyo 100-6150 (JP); SHIMIZU, Ryouichi, Tokyo 100-6150 (JP); AOYAGI, Kenichiro, Tokyo 100-6150 (JP); TAKAHASHI, Hideaki, Tokyo 100-6150 (JP); HAPSARI, Wuri Andarmawanti, Tokyo 100-6150 (JP)
(74) Representative: Hoffmann Eitle
(86) International application number: PCT/JP2013/050730
(87) International publication number: WO 2013/132893

(57) **Abstract**

Upon detecting an opportunity to release E-RABs related to mobile stations, a mobility management entity transmits a single E-RAB release information message that collectively specifies E-RABs to be released to a base station communicating with the mobile stations. Subsequently, upon receiving the E-RAB release information message, the base station transmits a single E-RAB release information acknowledge message to the mobility management entity. Upon receiving the E-RAB release information acknowledge message, the mobility management entity updates information related to the E-RABs so that the information indicates release of the E-RABs.

## Description

### TECHNICAL FIELD

The present invention relates to communication systems, mobility management entities, base stations, and communication methods, which are, in radio communication, suited for releasing E-UTRAN Radio Access Bearers (E-RABs) related to mobile stations.

### BACKGROUND ART

In Universal Mobile Telecommunications System Long Term Evolution (UMTS LTE), a logical communication path referred to as an E-UTRAN Radio Access Bearer (E-RAB) is set between a mobile station (UE) and a node within a core network. E-UTRAN is an abbreviation for Evolved Universal Terrestrial Radio Access Network. When communication terminates, the E-RAB is released. An MME manages established E-RABs for purposes such as charging for communication.

In relation to a release of an E-RAB, the 3rd Generation Partnership Project (3GPP) defines messages exchanged between an MME and a base station (eNB) (Non-patent Document 1). For the E-RAB release initiated by an MME, an E-RAB Release Command message is transmitted from the MME to an eNB (Sec. 8.2.3.2.1 of Non-patent Document 1). Upon receiving this message specifying an E-RAB to be released, the eNB releases the E-RAB and releases a Data Radio Bearer and radio resources corresponding to the E-RAB. For the E-RAB release initiated by the eNB, an E-RAB Release Indication message is transmitted from the eNB to the MME (Sec. 8.2.3.2.2 of Non-patent Document 1). Upon receiving this message specifying an E-RAB to be released, the MME initiates an appropriate procedure to release the E-RAB. Moreover, in relation to the E-RAB release, 3GPP defines an RRC Connection Reconfiguration message that is exchanged between an eNB and a UE (Sec. 5.3.5 of Non-patent Document 2).

An event can occur, for which E-RABs related to UEs should be released. For example, in the event of an impediment (failure) at an IP Multimedia Subsystem (IMS) while Voice over LTE (VoLTE), which communicates voice using packets, is in operation, the MME would detect the impediment. Similarly, in the event of an impediment in a physical line between the MME and the eNB, the MME or the eNB would detect the impediment. Events for which E-RABs related to UEs should be released are not limited to these examples. In any case, E-RABs related to UEs communicating with the eNB cannot be maintained. Thus, a procedure for collectively releasing these E-RABs is needed.

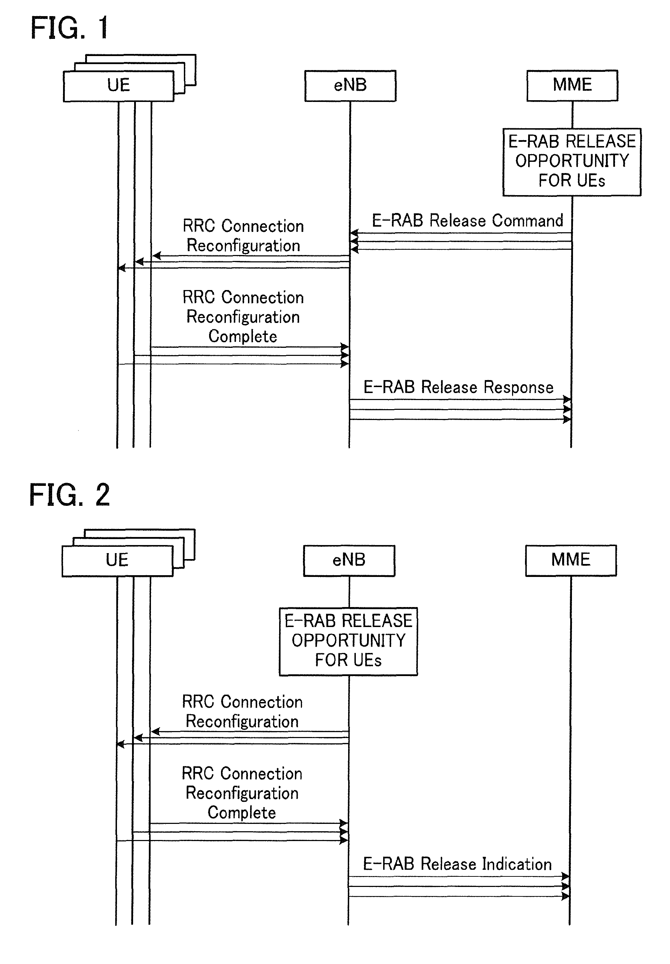

FIG. 1 shows an example of a procedure for releasing E-RABs related to UEs in accordance with the conventional 3GPP specification. When the MME detects an opportunity to release E-RABs related to UEs (e.g., detecting an impediment at the IMS or in a physical line between the MME and the eNB), the MME transmits, in accordance with Sec. 8.2.3.2.1 of Non-patent Document 1, E-RAB Release Command messages for the UEs to the eNB. Each of the E-RAB Release Command messages specifies at least one E-RAB to be released. After receiving the E-RAB Release Command messages, the eNB transmits, in accordance with Sec. 5.3.5 of Non-patent Document 2, an RRC Connection Reconfiguration message to each of the UEs. Upon confirming completion of RRC connection reconfiguration, each UE transmits an RRC Connection Reconfiguration Complete message to the eNB. Moreover, after receiving the E-RAB Release Command messages, the eNB transmits E-RAB Release Response messages to the MME in accordance with Sec. 8.2.3.2.1 of Non-patent Document 1. An E-RAB Release Response message indicates a list of E-RABs that were successfully released and a list of E-RABs that failed to be released. It should be noted that the E-RAB Release Response messages are transmitted from the eNB to the MME in response to the UEs related to the to-be-released E-RABs. That is, the number of the E-RAB Release Response messages transmitted is equal to the number of these UEs.

FIG. 2 shows another example of the procedure for releasing E-RABs related to UEs in accordance with the conventional 3GPP specification. When the eNB detects an opportunity to release E-RABs related to UEs (e.g., detecting an impediment in a physical line between the MME and the eNB), the eNB transmits, in accordance with Sec. 5.3.5 of Non-patent Document 2, an RRC Connection Reconfiguration message to each of the UEs. Upon confirming completion of RRC connection reconfiguration, each UE transmits an RRC Connection Reconfiguration Complete message to the eNB. Moreover, in accordance with Sec. 8.2.3.2.2 of Non-patent Document 1, the eNB transmits E-RAB Release Indication messages to the MME. The transmission of the E-RAB Release Indication messages may be either before or after the transmission of the RRC Connection Reconfiguration messages. It should be noted that the E-RAB Release Indication messages are transmitted from the eNB to the MME in response to the UEs related to the to-be-released E-RABs. That is, the number of the E-RAB Release Indication messages transmitted is equal to the number of these UEs.

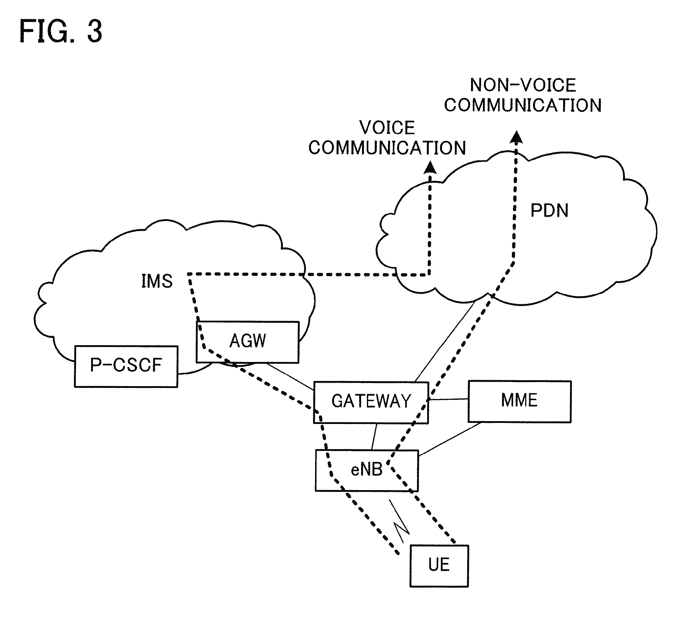

FIG. 3 illustrates a system configuration to implement VoLTE. VoLTE is a technology that provides voice communication by using packet communication. A gateway shown in FIG. 3 is connected to the IMS and Packet Data Network (PDN; e.g., the Internet). In FIG. 3, AGW is an abbreviation for Access Gateway Function, and P-CSCF is an abbreviation for Proxy-Call Session Control Function. Voice communication with a UE is provided by involving the PDN and the IMS. On the other hand, non-voice communication with the UE is provided by not involving the IMS, but involving the PDN. The MME controls communication between the eNB and the gateway. Thus, the MME is connected to the IMS and the PDN through the gateway.

### CITATION LIST

### NON-PATENT DOCUMENTS

Non-patent Document 1: 3GPP TS 36.413 V10.4.0 (2011-12), 3rd Generation Partnership Project; Technical Specification Group Radio Access Network; Evolved Universal Terrestrial Radio Access Network (E-UTRAN); S1 Application Protocol (S1AP) (Release 10), December, 2011.
Non-patent Document 2: 3GPP TS 36.331 V10.3.0 (2011-09), 3rd Generation Partnership Project; Technical Specification Group Radio Access Network; Evolved Universal Terrestrial Radio Access (E-UTRA); Radio Resource Control (RRC); Protocol specification (Release 10), September, 2011.

### SUMMARY OF INVENTION

### TECHNICAL PROBLEM

In a conventionally proposed communication system to implement VoLTE, when many UEs are connected to the IMS and if an impediment in IMS communication is caused due to reasons such as a breakdown of an IMS device, E-RABs related to the UEs need to be released. On the other hand, E-RABs related to a non-voice call, which are established without involving the IMS, are preferably maintained established.

The procedure initiated by the MME in accordance with the conventional 3GPP specification for releasing E-RABs related to UEs is as described by referring to FIG. 1. In this case, in order to release these E-RABs, the MME transmits E-RAB Release Command messages and receives E-RAB Release Response messages from the eNB. Thus, because the MME receives and processes multiple E-RAB Release Response messages, there is concern that an excessive load may be placed on the MME. It is possible that the E-RABs are released sequentially for each of the UEs so that the load placed on the MME at one time can be reduced. However, in this case, it would take a long time to release all the E-RABs for the many UEs. Alternatively, it is possible to perform the Reset procedure between the MME and the eNB (Sec. 8.7.1 of Non-patent Document 1). However, the Reset procedure would terminate communication between the MME and the eNB, and consequently, all the E-RABs related to UEs that have been communicating with the eNB would be released. Thus, E-RABs related to a non-voice call, which are established without involving the IMS, cannot be maintained established.

On the other hand, if, for example, the eNB detects an impediment in a physical line between the MME and the eNB, it is possible that the eNB initiates a procedure for releasing E-RABs related to UEs. This procedure is as described by referring to FIG. 2. In this case, when releasing these E-RABs, the eNB transmits E-RAB Release Indication messages to the MME. Thus, because the MME receives and processes multiple E-RAB Release Response messages, there is a concern that an excessive load may be placed on the MME. In order to reduce the load placed on the MME at one time, the two alternative measures described above are possible. However, similar issues would arise.

In light of the situation above, the present invention provides a communication system, a mobility management entity, a base station, and a communication method, each of which reduces a load placed on an MME on the release of multiple E-RABs related to multiple UEs.

### SOLUTION TO PROBLEM

In a first aspect according to the present invention, a communication system includes a base station and a mobility management entity. The mobility management entity includes: a detection unit configured to detect an opportunity to release E-UTRAN Radio Access Bearers (E-RABs) related to mobile stations; a mobility management entity transmitting unit configured to transmit a single E-RAB release information message that collectively specifies the E-RABs that are detected by the detection unit to be released to the base station communicating with the mobile stations; and a mobility management entity receiving unit configured to receive a single E-RAB release information acknowledge message from the base station. The base station includes: a base station receiving unit configured to receive the E-RAB release information message; and a base station transmitting unit configured to transmit, upon the base station receiving unit receiving the E-RAB release information message, the single E-RAB release information acknowledge message to the mobility management entity. The base station may further include a radio transmitting unit that is configured to command, after the base station receiving unit having received the E-RAB release information message, the mobile stations to release the respective E-RABs.

In the first aspect, when releasing E-RABs related to mobile stations, the mobility management entity transmits a single E-RAB release information message that collectively specifies to-be-released E-RABs to the base station, and receives a single E-RAB release information acknowledge message. Thus, a load placed on the MME on the release of the E-RABs related to the UEs can be reduced.

The mobility management entity may further include an E-RAB information updating unit that is configured to update, upon the mobility management entity receiving unit receiving the E-RAB release information acknowledge message, information related to the E-RABs so that the information indicates release of the E-RABs.

By the mobility management entity updating, after receiving an E-RAB release information acknowledge message from the base station, information related to to-be-released E-RABs so that the information indicates release of the E-RABs, an inconsistency between E-RABs that are actually established and information that is managed by the mobility management entity can be avoided. Updating the information so that the information indicates the release of the E-RABs includes, for example, deleting the released E-RABs from records that are related to established E-RABs and are in the mobility management entity.

The mobility management entity transmitting unit may retransmit the E-RAB release information message to the base station when the mobility management entity receiving unit does not receive the E-RAB release information acknowledge message from the base station in a predetermined amount of time after the mobility management entity transmitting unit has transmitted the E-RAB release information message to the base station.

By retransmitting the E-RAB release information message as described above, certainty that the E-RAB release information message reaches the base station can be increased.

The base station may further include an E-RAB information updating unit that is configured to update, after the base station receiving unit having received the E-RAB release information message, information related to the E-RABs so that the information indicates release of the E-RABs.

According to the configuration above, since the information managed by the base station is updated based on the E-RAB release information message transmitted by the mobility management entity, an inconsistency between the information managed by the mobility management entity and the information managed by the base station can be avoided.

In a second aspect according to the present invention, a communication system includes a base station and a mobility management entity. The base station includes: a detection unit configured to detect an opportunity to release E-RABs related to mobile stations with which the base station is communicating; a base station transmitting unit configured to transmit a single E-RAB release information message that collectively specifies the E-RABs that are detected by the detection unit to be released to the mobility management entity; and a base station receiving unit configured to receive a single E-RAB release information acknowledge message from the mobility management entity. The mobility management entity includes: a mobility management entity receiving unit configured to receive the E-RAB release information message; and a mobility management entity transmitting unit configured to transmit, upon the mobility management entity receiving unit receiving the E-RAB release information message, the single E-RAB release information acknowledge message to the base station. The base station may further include a radio transmitting unit that is configured to command, after the base station transmitting unit having transmitted the E-RAB release information message, the mobile stations to release the respective E-RABs.

In the second aspect, when releasing E-RABs related to mobile stations, the base station transmits a single E-RAB release information message that collectively specifies to-be-released E-RABs to the mobility management entity, and receives a single E-RAB release information confirmation message. Thus, a load placed on the MME on the release of the E-RABs related to the UEs can be reduced.

The mobility management entity may further include an E-RAB information updating unit that is configured to update, after the mobility management entity receiving unit having received the E-RAB release information message, information related to the E-RABs so that the information indicates release of the E-RABs.

By the mobility management entity updating, after receiving an E-RAB release information message from the base station, information related to to-be-released E-RABs so that the information indicates release of the E-RABs, an inconsistency between E-RABs that are actually established and the information that is managed by the mobility management entity can be avoided. Updating the information so that the information indicates the release of the E-RABs includes, for example, deleting the released E-RABs from records that are related to established E-RABs and are in the mobility management entity.

The base station transmitting unit may retransmit the E-RAB release information message to the mobility management entity when the base station receiving unit does not receive the E-RAB release information acknowledge message from the mobility management entity in a predetermined amount of time after the base station transmitting unit has transmitted the E-RAB release information message to the mobility management entity.

By retransmitting the E-RAB release information message as described above, certainty that the E-RAB release information message reaches the mobility management entity can be increased. In particular, when there is an impediment, such as momentary interruption, in a physical line between the mobility management entity and the base station, it is possible that the E-RAB release information message will not reach the mobility management entity. Thus, it is preferable that the base station can retransmit the E-RAB release information message.

The base station may further include an E-RAB information updating unit configured to update, upon the base station receiving unit receiving the E-RAB release information acknowledge message, information related to the E-RABs so that the information indicates release of the E-RABs.

According to the configuration above, since the information managed by the base station is updated based on the E-RAB release information acknowledge message transmitted by the mobility management entity, an inconsistency between the information managed by the mobility management entity and the information managed by the base station can be avoided.

In the first aspect according to the present invention, a mobility management entity includes: a detection unit configured to detect an opportunity to release E-RABs related to mobile stations; a mobility management entity transmitting unit configured to transmit a single E-RAB release information message that collectively specifies the E-RABs that are detected by the detection unit to be released to a base station communicating with the mobile stations; and a mobility management entity receiving unit configured to receive a single E-RAB release information acknowledge message from the base station.

The mobility management entity may further include an E-RAB information updating unit configured to update, upon the mobility management entity receiving unit receiving the E-RAB release information acknowledge message, information related to the E-RABs so that the information indicates release of the E-RABs.

The mobility management entity transmitting unit may retransmit the E-RAB release information message to the base station when the mobility management entity receiving unit does not receive the E-RAB release information acknowledge message from the base station in a predetermined amount of time after the mobility management entity transmitting unit has transmitted the E-RAB release information message to the base station.

In the second aspect according to the present invention, a mobility management entity includes: a mobility management entity receiving unit configured to receive, from a base station, a single E-RAB release information message that collectively specifies E-RABs that are related to mobile stations with which the base station is communicating and are to be released; and a mobility management entity transmitting unit configured to transmit, upon the mobility management entity receiving unit receiving the E-RAB release information message, a single E-RAB release information acknowledge message to the base station.

The mobility management entity may further include an E-RAB information updating unit configured to update, after the mobility management entity receiving unit having received the E-RAB release information message, information related to the E-RABs so that the information indicates release of the E-RABs.

In the first aspect according to the present invention, a base station includes: a base station receiving unit configured to receive, from a mobility management entity, a single E-RAB release information message that collectively specifies E-RABs that are related to mobile stations with which the base station is communicating and are to be released; and a base station transmitting unit configured to transmit, upon the base station receiving unit receiving the E-RAB release information message, a single E-RAB release information acknowledge message to the mobility management entity. The base station may further include a radio transmitting unit configured to command, after the base station receiving unit having received the E-RAB release information message, the mobile stations to release the respective E-RABs.

The base station may further include an E-RAB information updating unit configured to update, after the base station receiving unit having received the E-RAB release information message, information related to the E-RABs so that the information indicates release of the E-RABs.

In the second aspect according to the present invention, a base station includes: a detection unit configured to detect an opportunity to release E-RABs related to mobile stations with which the base station is communicating; a base station transmitting unit configured to transmit a single E-RAB release information message that collectively specifies the E-RABs that are detected by the detection unit to be released to a mobility management entity; and a base station receiving unit configured to receive a single E-RAB release information acknowledge message from the mobility management entity. The base station may further include a radio transmitting unit configured to command, after the base station transmitting unit having transmitted the E-RAB release information message, the mobile stations to release the respective E-RABs.

The base station transmitting unit may retransmit the E-RAB release information message to the mobility management entity when the base station receiving unit does not receive the E-RAB release information acknowledge message from the mobility management entity in a predetermined amount of time after the base station transmitting unit has transmitted the E-RAB release information message to the mobility management entity.

The base station may further include an E-RAB information updating unit configured to update, upon the base station receiving unit receiving the E-RAB release information acknowledge message, information related to the E-RABs so that the information indicates release of the E-RABs.

In the first aspect according to the present invention, a communication method includes: in a mobility management entity, detecting an opportunity to release E-RABs related to mobile stations, and transmitting a single E-RAB release information message that collectively specifies the E-RABs to be released to a base station communicating with the mobile stations; and in the base station, transmitting, upon receiving the E-RAB release information message, a single E-RAB release information acknowledge message to the mobility management entity. The communication method may further include, in the base station, commanding, after receiving the E-RAB release information message, the mobile stations to release the respective E-RABs.

The communication method may further include, in the mobility management entity, updating, upon receiving the E-RAB release information acknowledge message, information related to the E-RABs so that the information indicates release of the E-RABs.

The communication method may further include, in the mobility management entity, retransmitting the E-RAB release information message to the base station when not receiving the E-RAB release information acknowledge message from the base station in a predetermined amount of time after having transmitted the E-RAB release information message to the base station.

The communication method may further include, in the base station, updating, after receiving the E-RAB release information message, information related to the E-RABs so that the information indicates release of the E-RABs.

In the second aspect according to the present invention, a communication method includes: in a base station that is communicating with mobile stations, detecting an opportunity to release E-RABs related to the mobile stations, and transmitting a single E-RAB release information message that collectively specifies the E-RABs to be released to a mobility management entity; and in the mobility management entity, transmitting, upon receiving the E-RAB release information message, a single E-RAB release information acknowledge message to the base station. The communication method may further include, in the base station, commanding, after transmitting the E-RAB release information message, the mobile stations to release the respective E-RABs.

The communication method may further include, in the mobility management entity, updating, upon receiving the E-RAB release information message, information related to the E-RABs so that the information indicates release of the E-RABs.

The communication method may further include, in the base station, retransmitting the E-RAB release information message to the mobility management entity when not receiving the E-RAB release information acknowledge message from the mobility management entity in a predetermined amount of time after having transmitted the E-RAB release information message to the mobility management entity.

The communication method may further include, in the base station, updating, upon receiving the E-RAB release information acknowledge message, information related to the E-RABs so that the information indicates release of the E-RABs.

### BRIEF DESCRIPTION OF DRAWINGS

FIG. 1 is a sequence diagram showing an example of a procedure for releasing E-RABs related to mobile stations in accordance with the conventional specification by 3GPP;
FIG. 2 is a sequence diagram showing another example of the procedure for releasing E-RABs related to mobile stations in accordance with the conventional specification by 3GPP;
FIG. 3 is a diagram illustrating a system configuration to implement VoLTE;
FIG. 4 is a sequence diagram showing a communication method according to a first embodiment of the present invention;
FIG. 5 is a flowchart showing an operation by a mobility management entity according to the first embodiment;
FIG. 6 is a block diagram illustrating a base station according to the first embodiment;
FIG. 7 is a block diagram illustrating the mobility management entity according to the first embodiment;
FIG. 8 is a sequence diagram showing a communication method according to a second embodiment of the present invention;
FIG. 9 is a flowchart showing an operation by a base station according to the second embodiment;
FIG. 10 is a block diagram illustrating the base station according to the second embodiment;
FIG. 11 is a block diagram illustrating a mobility management entity according to the second embodiment.

### DESCRIPTION OF EMBODIMENTS

With reference to the attached drawings, various embodiments according to the present invention are described below. For simplicity, it is assumed that communication systems according to the present invention have a configuration to implement VoLTE as described above by referring to FIG. 3. However, the present invention is not limited to communication systems in which VoLTE is implemented. The present invention can be applied to other communication systems in which an MME (mobility management entity) or an eNB (base station) detects an opportunity to release E-RABs related to UEs (mobile stations). Although FIG. 3 shows only a single UE and a single eNB, one skilled in the art would understand that there could be many UEs and eNBs.

### First Embodiment

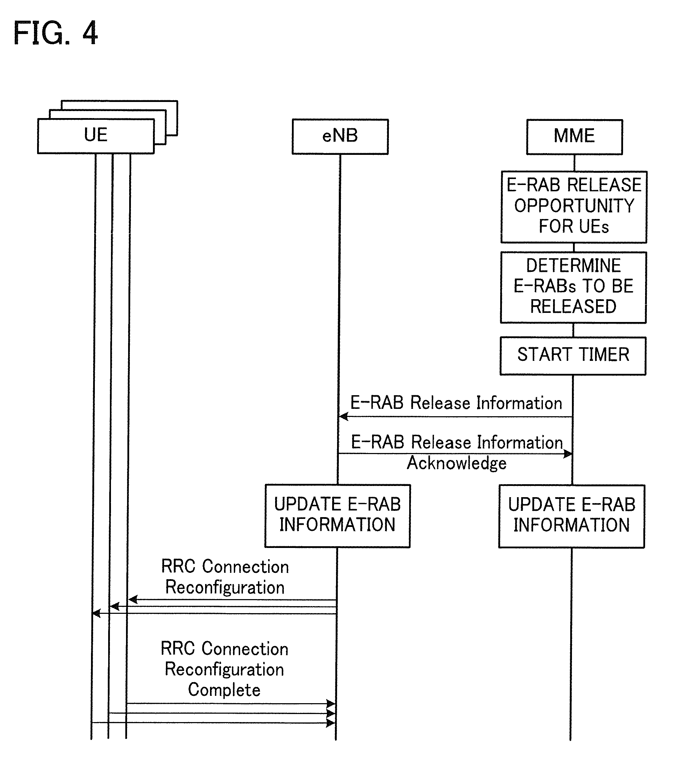

By referring to FIGs. 4 to 7, a release of multiple E-RABs according to a first embodiment of the present invention is described below. In the first embodiment, an MME detects an opportunity to release E-RABs to initiate release of the E-RABs.

As shown in FIG. 4, the MME determines whether an opportunity (E-RAB release opportunity) to release E-RABs related to UEs is detected. Once the E-RAB release opportunity is detected, the MME determines E-RABs to be released. After the determination, the MME starts a timer that counts a predetermined amount of time (details described later), and also transmits a single E-RAB release information message that collectively specifies the to-be-released E-RABs to an eNB that is in communication with the UEs (the UEs corresponding to the to-be-released E-RABs).

Upon receiving the E-RAB release information message, the eNB transmits a single E-RAB release information acknowledge message to the MME. After receiving the E-RAB release information message, the eNB commands the UEs to release the respective E-RABs. More specifically, after receiving the E-RAB release information message, the eNB transmits, in accordance with Sec. 5.3.5 of Non-patent Document 2, an RRC Connection Reconfiguration message to each of the UEs. Each UE performs, in accordance with the received RRC Connection Reconfiguration message, radio configuration (RRC connection reconfiguration) of its own device. After confirming completion of the radio configuration (RRC connection reconfiguration) of its own device, each UE transmits an RRC Connection Reconfiguration Complete message to the eNB.

The eNB may transmit the RRC Connection Reconfiguration message to each of the UEs after transmitting the E-RAB release information acknowledge message. The eNB may transmit the RRC Connection Reconfiguration message to each of the UEs before transmitting the E-RAB release information acknowledge message.

After receiving the E-RAB release information acknowledge message, the MME may update information (E-RAB information) related to the E-RABs so that the information indicates release of the E-RABs. The concept "the MME may update information ... so that the information indicates release of the E-RABs" includes, for example, deleting the released E-RABs from records (E-RAB information) that are related to established E-RABs and are in the MME.

The MME may update, before receiving the E-RAB release information acknowledge message, the information (E-RAB information) related to the E-RABs so that the information indicates the release of the E-RABs. Preferably, the update described above is performed in accordance with the E-RAB release information message.

Furthermore, the eNB may update, after transmitting the E-RAB release information acknowledge message, information (E-RAB information) related to the E-RABs so that the information indicates release of the E-RABs. The eNB may update, even before transmitting the E-RAB release information acknowledge message, if after having received the E-RAB release information message, the information (E-RAB information) related to the E-RABs so that the information indicates the release of the E-RABs.

In addition to performing the procedure described above, the MME may control other nodes so that the nodes perform procedures necessary for releasing E-RABs. For example, the MME may transmit a control message to a gateway to which to-be-released E-RABs are set to make the gateway release the E-RABs.

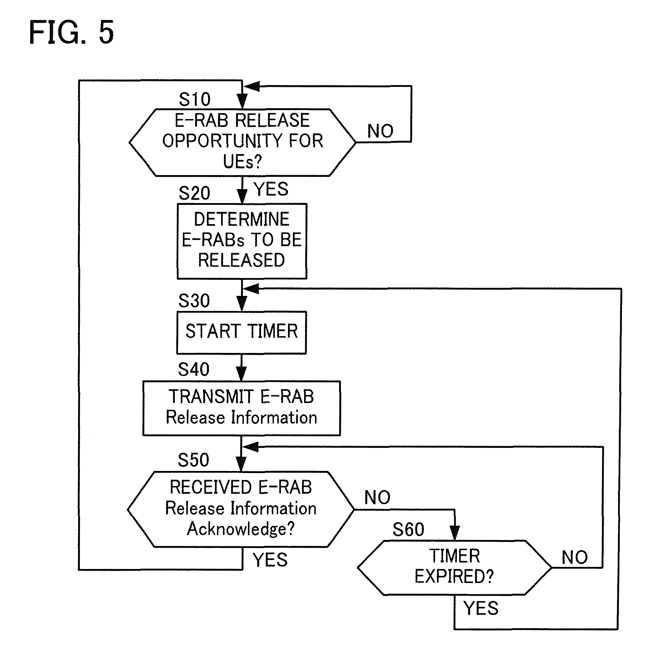

FIG. 5 is a diagram showing an example of an operation flow of multiple-E-RAB release control performed by the MME according to the first embodiment. If the MME detects an E-RAB release opportunity (S10: YES), the MME determines E-RABs to be released (S20). After step S20, the MME starts a timer that counts a predetermined amount of time (S30), and also transmits a single E-RAB release information message that indicates the to-be-released E-RABs to the eNB (S40).

Subsequently, the MME determines whether the MME has received an E-RAB Release Information Acknowledge from the eNB (S50). The MME continues the determination described above until the timer set at step S30 expires (S50 and S60). If an E-RAB Release Information Acknowledge has not been received before the timer expires (S60: YES), the MME restarts the timer (S30) and also retransmits the E-RAB release information message to the eNB (S40).

In other words, in the example of the control as shown in FIG. 5, if the MME does not receive the E-RAB release information acknowledge message from the eNB within a predetermined amount of time after the MME has transmitted the E-RAB release information message to the eNB, the MME retransmits the E-RAB release information message to the eNB. A configuration that limits the number of the retransmissions can also be used.

On the other hand, if the MME receives the E-RAB release information acknowledge message from the eNB (S50: YES), the procedure returns to step S10 and the MME again performs detection of an E-RAB release opportunity. As described above, the MME may update the E-RAB information in the MME after receiving the E-RAB release information acknowledge message (S50: YES).

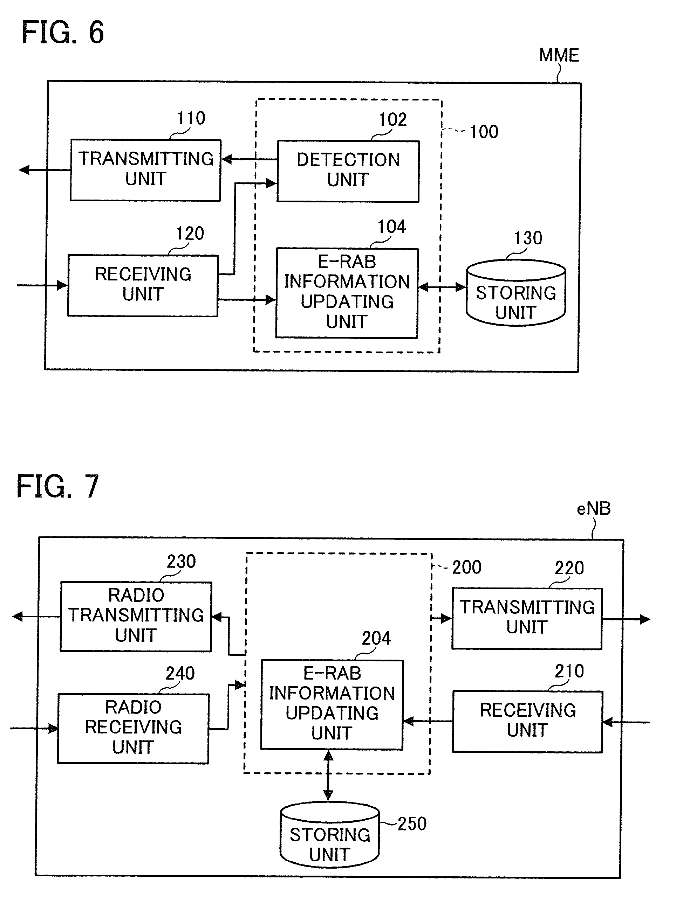

FIG. 6 is a block diagram illustrating an example of a configuration of the MME that performs the multiple-E-RAB release as described above. The MME includes a control unit 100, a transmitting unit 110, and a receiving unit 120. The control unit 100 controls operation of the entire MME including the transmitting unit 110 and the receiving unit 120. The control unit 100 includes a detection unit 102 that detects an opportunity to release E-RABs related to UEs. The transmitting unit 110 is a mobility management entity transmitting unit that transmits a single E-RAB release information message that collectively specifies the to-be-released E-RABs detected by the detection unit 102 to the eNB communicating with the UEs. The receiving unit 120 is a mobility management entity receiving unit that receives a single E-RAB release information acknowledge message from the eNB.

The control unit 100 of the MME may include an E-RAB information updating unit 104 that updates, upon the receiving unit (mobility management entity receiving unit) 120 receiving the E-RAB release information acknowledge message, information (E-RAB information) related to the E-RABs so that the information indicates release of the E-RABs. The E-RAB information can be stored in a storing unit 130.

As described above by referring to FIG. 5, the transmitting unit (mobility management entity transmitting unit) 110 may, when the receiving unit 120 does not receive the E-RAB release information acknowledge message from the eNB within a predetermined amount of time after the transmitting unit 110 has transmitted the E-RAB release information message to the eNB, retransmit the E-RAB release information message to the eNB.

The control unit 100 is a functional block performed by a central processing unit (CPU), which is in the MME and is not shown in the figure, executing a computer program stored in the storing unit 130 and functioning in accordance with the computer program.

FIG. 7 is a block diagram illustrating an example of a configuration of the eNB that performs the multiple-E-RAB release described above. The eNB includes a control unit 200, a receiving unit 210, a transmitting unit 220, a radio transmitting unit 230, and a radio receiving unit 240. The control unit 200 controls operation of the entire eNB including the receiving unit 210, the transmitting unit 220, the radio transmitting unit 230, and the radio receiving unit 240. The receiving unit 210 is a base station receiving unit that receives, from the MME, a single E-RAB release information message that collectively specifies to-be-released E-RABs related to UEs with which the eNB is communicating. The transmitting unit 220 is a base station transmitting unit that transmits, upon the receiving unit 210 receiving the E-RAB release information message, a single E-RAB release information acknowledge message to the MME. The radio transmitting unit 230 commands, after the receiving unit 210 having received the E-RAB release information message, the UEs to release the respective E-RABs (transmits an RRC Connection Reconfiguration message to each UE). The radio receiving unit 240 receives RRC Connection Reconfiguration Complete messages from the UEs.

The control unit 200 of the eNB may include an E-RAB information updating unit 204 that updates, upon the receiving unit 210 receiving the E-RAB release information message, information (E-RAB information) related to the E-RABs so that the information indicates release of the E-RABs. The E-RAB information can be stored in a storing unit 250.

The control unit 200 is a functional block performed by a CPU, which is in the eNB and is not shown in the figure, executing a computer program stored in the storing unit 250 and functioning in accordance with the computer program.

According to the configuration above, when releasing E-RABs related to UEs, the MME transmits a single E-RAB release information message that collectively specifies to-be-released E-RABs to the eNB, and receives a single E-RAB release information acknowledge message. Thus, compared with a configuration in which the release of a single E-RAB requires a single message, a load placed on the MME on the release of E-RABs related to UEs can be reduced.

The MME (control unit 100) can include an E-RAB information updating unit 104 that updates, upon the receiving unit 120 receiving an E-RAB release information acknowledge message, information (E-RAB information) related to E-RABs so that the information indicates release of the E-RABs.

According to the configuration above, since the MME updates, after receiving the E-RAB release information acknowledge message from the eNB, the information related to the to-be-released E-RABs so that the information indicates the release of the E-RABs, an inconsistency between E-RABs that are actually established and information that is managed by the MME can be avoided.

The transmitting unit 110 (mobility management entity transmitting unit) of the MME may, when the receiving unit 120 does not receive the E-RAB release information acknowledge message from the eNB within a predetermined amount of time after the transmitting unit 110 has transmitted the E-RAB release information message to the eNB, retransmit the E-RAB release information message to the eNB. By retransmitting the E-RAB release information message as described above, certainty that the E-RAB release information message reaches the eNB can be increased.

According to the configuration above, since the MME specifies E-RABs to be released and commands the eNB to release the E-RABs, compared with a configuration in which all E-RABs are released by the Reset procedure performed between the MME and the eNB, E-RABs related to a non-voice call, which are established without involving the IMS, can be maintained established.

### Second Embodiment

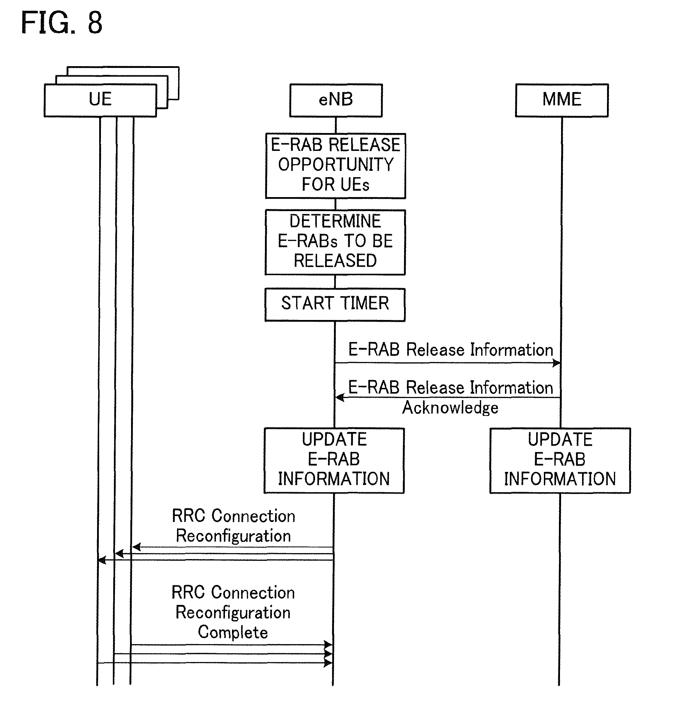

By referring to FIGs. 8 to 11, a release of multiple E-RABs according to a second embodiment of the present invention is described below. In the first embodiment, an MME detects an opportunity to release E-RABs; however, in the second embodiment, an eNB detects an opportunity to release E-RABs to initiate release of the E-RABs.

FIG. 8 is a sequence diagram showing a communication method according to the second embodiment of the present invention. An opportunity to release E-RABs related to UEs is detected by an eNB communicating with the UE. Once the E-RAB release opportunity is detected, the eNB determines E-RABs to be released. After the determination, the eNB starts a timer that counts a predetermined amount of time (details follow), and also transmits a single E-RAB release information message that collectively specifies the to-be-released E-RABs to an MME.

Upon receiving the E-RAB release information message, the MME transmits a single E-RAB release information acknowledge message to the eNB. After receiving the E-RAB release information acknowledge message, the eNB commands the UEs to release the respective E-RABs. More specifically, after receiving the E-RAB release information acknowledge message, the eNB transmits, in accordance with Sec. 5.3.5 of Non-patent Document 2, an RRC Connection Reconfiguration message to each of the UEs. Each UE performs, in accordance with the received RRC Connection Reconfiguration message, radio configuration (RRC connection reconfiguration) of its own device. After confirming completion of the radio configuration (RRC connection reconfiguration) of its own device, each UE transmits an RRC Connection Reconfiguration Complete message to the eNB.

The eNB may transmit, even before receiving the E-RAB release information acknowledge message, if after having determined the E-RABs to be released, the RRC Connection Reconfiguration messages to the UEs.

The eNB may transmit the E-RAB release information message before transmitting the RRC Connection Reconfiguration message. The eNB may transmit the E-RAB release information message after transmitting the RRC Connection Reconfiguration message.

After receiving the E-RAB release information message, the MME may update information (E-RAB information) related to the E-RABs so that the information indicates release of the E-RABs. The concept "the MME may update information ... so that the information indicates release of the E-RABs" includes, for example, deleting the released E-RABs from records (E-RAB information) that are related to established E-RABs and are in the MME. The MME may update the E-RAB information either before or after transmitting the E-RAB release information acknowledge message to the eNB.

Furthermore, the eNB may update, after receiving the E-RAB release information acknowledge message, information (E-RAB information) related to the E-RABs so that the information indicates release of the E-RABs. The eNB may update, even before receiving the E-RAB release information acknowledge message, if after having transmitted the E-RAB release information message, the information (E-RAB information) related to the E-RABs so that the information indicates the release of the E-RABs.

In addition to performing the procedure described above, the MME may control other nodes so that the nodes perform procedures necessary for releasing E-RABs. For example, the MME may transmit a control message to a gateway to which to-be-released E-RABs are set to make the gateway release the E-RABs.

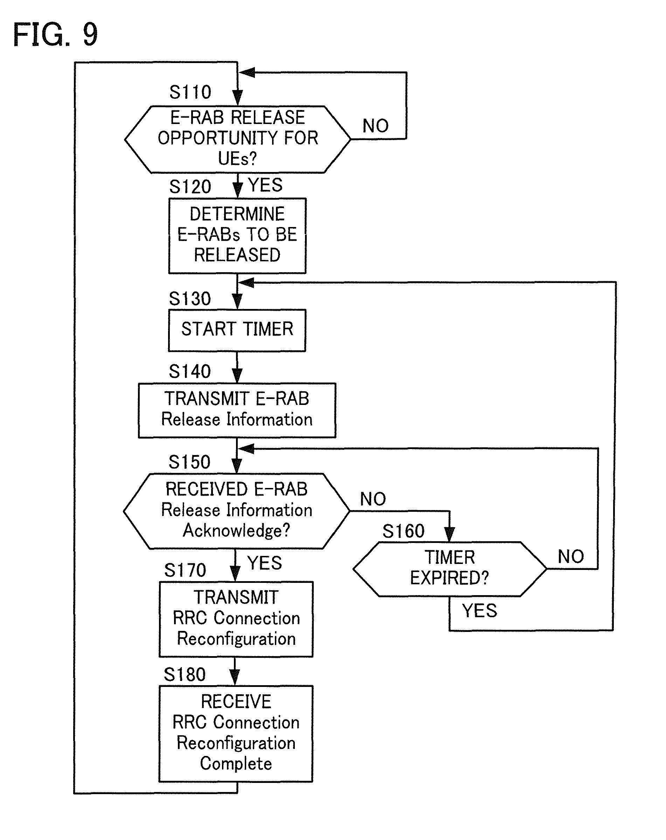

FIG. 9 is a diagram showing an example of an operation flow of multiple-E-RAB release control performed by the eNB according to the second embodiment. If the eNB detects an E-RAB release opportunity (S110: YES), the eNB determines E-RABs to be released (S120). After step S120, the eNB starts a timer that counts a predetermined amount of time (S130), and also transmits a single E-RAB release information message that indicates the to-be-released E-RABs to the MME (S140).

Subsequently, the eNB determines whether the eNB has received an E-RAB Release Information Acknowledge from the MME (S150). The eNB continues the determination described above until the timer set at step S130 expires (S150 and S160). If an E-RAB Release Information Acknowledge has not been received before the timer expires (S160: YES), the eNB restarts the timer (S130) and also retransmits the E-RAB release information message to the MME (S140).

In other words, in the example of the control as shown in FIG. 9, if the eNB does not receive the E-RAB release information acknowledge message from the MME within a predetermined amount of time after the eNB has transmitted the E-RAB release information message to the MME, the eNB retransmits the E-RAB release information message to the MME. A configuration that limits the number of the retransmissions can also be used.

On the other hand, if the eNB receives the E-RAB release information acknowledge message from the MME (S150: YES), the eNB transmits, to the UEs, RRC Connection Reconfiguration messages commanding the UEs to release the respective E-RABs (S170). Each UE performs, in accordance with the received RRC Connection Reconfiguration message, radio configuration (RRC connection reconfiguration) of its own device, and then, transmits an RRC Connection Reconfiguration Complete message to the eNB. The eNB receives the RRC Connection Reconfiguration Complete message from each of the UEs (S180). Subsequently, the procedure returns to step S110, and the eNB again performs detection of an E-RAB release opportunity.

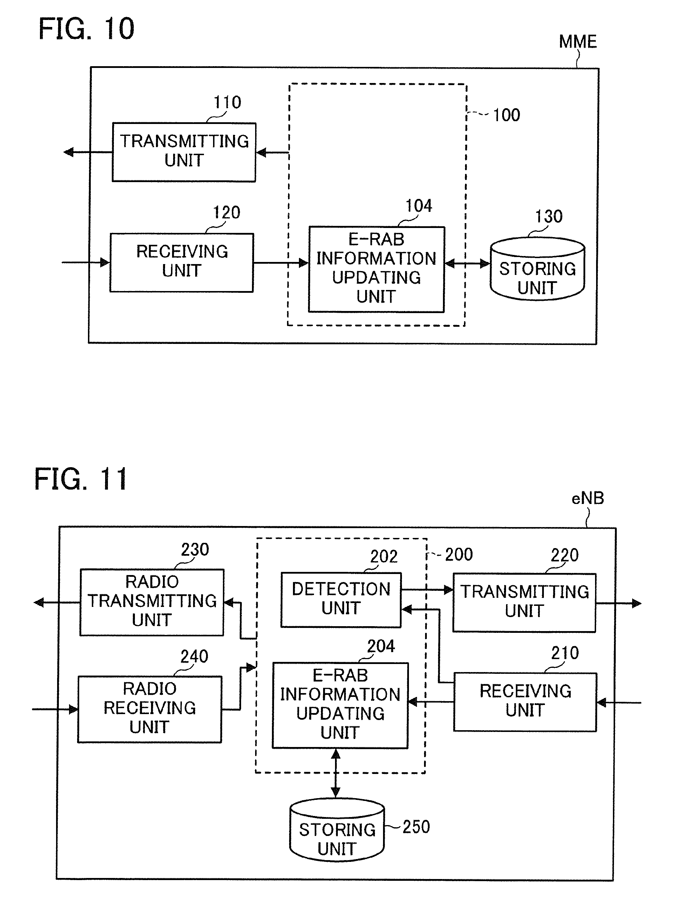

FIG. 10 is a block diagram illustrating an example of a configuration of the MME that performs the multiple-E-RAB release as described above. The MME includes a control unit 100, a transmitting unit 110, and a receiving unit 120. The control unit 100 controls operation of the entire MME including the transmitting unit 110 and the receiving unit 120. The receiving unit 120 is a mobility management entity receiving unit that receives, from the eNB, a single E-RAB release information message that collectively specifies to-be-released E-RABs related to UEs with which the eNB is communicating. The transmitting unit 110 is a mobility management entity transmitting unit that transmits, upon the receiving unit 120 receiving the E-RAB release information message, a single E-RAB release information acknowledge message to the eNB.

The control unit 100 of the MME may include an E-RAB information updating unit 104 that update, upon the receiving unit (mobility management entity receiving unit) 120 receiving the E-RAB release information message, information (E-RAB information) related to the E-RABs so that the information indicates release of the E-RABs. The E-RAB information can be stored in a storing unit 130.

The control unit 100 is a functional block performed by a CPU, which is in the MME and is not shown in the figure, executing a computer program stored in the storing unit 130 and functioning in accordance with the computer program.

FIG. 11 is a block diagram illustrating an example of a configuration of the eNB that performs the multiple-E-RAB release described above. The eNB includes a control unit 200, a receiving unit 210, a transmitting unit 220, a radio transmitting unit 230, and a radio receiving unit 240. The control unit 200 controls operation of the entire eNB including the receiving unit 210, the transmitting unit 220, the radio transmitting unit 230, and the radio receiving unit 240. The control unit 200 includes a detection unit 202 that detects an opportunity to release E-RABs related to UEs with which the eNB is communicating. The transmitting unit 220 is a base station transmitting unit that transmits a single E-RAB release information message that collectively specifies the to-be-released E-RABs detected by the detection unit to the MME. The receiving unit 210 is a base station receiving unit that receives a single E-RAB release information acknowledge message from the MME. The radio transmitting unit 230 commands, after the transmitting unit 220 having transmitted the E-RAB release information message, the UEs to release the respective E-RABs (transmits an RRC Connection Reconfiguration message to each UE). The radio receiving unit 240 receives RRC Connection Reconfiguration Complete messages from the UEs.

The control unit 200 of the eNB may include an E-RAB information updating unit 204 that updates, upon the receiving unit 210 receiving the E-RAB release information acknowledge message, information (E-RAB information) related to the E-RABs so that the information indicates release of the E-RABs. The E-RAB information can be stored in a storing unit 250.

As described above by referring to FIG. 9, the transmitting unit (base station transmitting unit) 220 may, when the receiving unit 210 does not receive the E-RAB release information acknowledge message from the MME within a predetermined amount of time after the transmitting unit 220 has transmitted the E-RAB release information message to the MME, retransmit the E-RAB release information message to the MME.

The control unit 200 is a functional block performed by a CPU, which is in the eNB and is not shown in the figures, executing a computer program stored in the storing unit 250 and functioning in accordance with the computer program.

According to the configuration above, when releasing E-RABs related to UEs, the eNB transmits a single E-RAB release information message that collectively specifies to-be-released E-RABs to the MME, and receives a single E-RAB release information message. Thus, a load placed on the MME on the release of E-RABs related to UEs can be reduced.

The MME (control unit 100) can include an E-RAB information updating unit 104 that updates, after the receiving unit 120 having received the E-RAB release information message, information (E-RAB information) related to the E-RABs so that the information indicates release of the E-RABs.

According to the configuration above, since the MME updates, after receiving the E-RAB release information confirmation message from the eNB, the information related to the to-be-released E-RABs so that the information indicates the release of the E-RABs, an inconsistency between E-RABs that are actually established and information that is managed by the MME can be avoided.

The transmitting unit 220 (base station transmitting unit) of the eNB may, when the receiving unit 210 does not receive the E-RAB release information acknowledge message from the MME within a predetermined amount of time after the transmitting unit 220 has transmitted the E-RAB release information message to the MME, retransmit the E-RAB release information message to the MME. By retransmitting the E-RAB release information message as described above, certainty that the E-RAB release information message reaches the MME can be increased. In particular, when there is an impediment, such as momentary interruption, in a physical line between the MME and the eNB, it is possible that the E-RAB release information message will not reach the MME. Thus, it is understood to be preferable that the eNB can retransmit the E-RAB release information message.

### OTHER MODIFICATIONS

The embodiments described above can be modified in various ways. Examples of modifications are described below. Two or more of the modifications can be combined as appropriate, provided that the combined modifications do not conflict with each other.

### (1) Modification 1

A UE is a freely-chosen device capable of communicating wirelessly with an eNB. The UE may be, for example, a mobile phone terminal, a desktop personal computer, a laptop personal computer, an ultra-mobile personal computer (UMPC), a portable game console, or any other type of wireless terminal.

### (2) Modification 2

Each function executed by a CPU in an MME and an eNB may be executed by a piece of hardware instead of by a CPU, or by a programmable logic device such as a field programmable gate array (FPGA) and a digital signal processor (DSP).

### REFERENCE SYMBOLS

- eNB:: Base Station
- 100:: Control Unit
- 102:: Detection Unit
- 104:: E-RAB Information Updating Unit
- 110:: Transmitting Unit
- 120:: Receiving Unit
- 130:: Storing Unit
- MME:: Mobility Management Entity
- 200:: Control Unit
- 202:: Detection Unit
- 204:: E-RAB Information Updating Unit
- 210:: Receiving Unit
- 220:: Transmitting Unit
- 230:: Radio Transmitting Unit
- 240:: Radio Receiving Unit
- 250:: Storing Unit

## Claims

1. A communication system comprising:
a base station; and
a mobility management entity,
the mobility management entity comprising:
a detection unit configured to detect an opportunity to release E-UTRAN Radio Access Bearers (E-RABs) related to mobile stations;
a mobility management entity transmitting unit configured to transmit a single E-RAB release information message that collectively specifies the E-RABs that are detected by the detection unit to be released to the base station communicating with the mobile stations; and
a mobility management entity receiving unit configured to receive a single E-RAB release information acknowledge message from the base station,
the base station comprising:
a base station receiving unit configured to receive the E-RAB release information message; and
a base station transmitting unit configured to transmit, upon the base station receiving unit receiving the E-RAB release information message, the single E-RAB release information acknowledge message to the mobility management entity.

2. The communication system according to Claim 1,
wherein the base station further comprises:
a radio transmitting unit configured to command, after the base station receiving unit having received the E-RAB release information message, the mobile stations to release the respective E-RABs.

3. The communication system according to Claim 1,
wherein the mobility management entity further comprises:
an E-RAB information updating unit configured to update, upon the mobility management entity receiving unit receiving the E-RAB release information acknowledge message, information related to the E-RABs so that the information indicates release of the E-RABs.

4. The communication system according to Claim 1,
wherein the mobility management entity transmitting unit retransmits the E-RAB release information message to the base station when the mobility management entity receiving unit does not receive the E-RAB release information acknowledge message from the base station in a predetermined amount of time after the mobility management entity transmitting unit has transmitted the E-RAB release information message to the base station.

5. The communication system according to Claim 1,
wherein the base station further comprises:
an E-RAB information updating unit configured to update, after the base station receiving unit having received the E-RAB release information message, information related to the E-RABs so that the information indicates release of the E-RABs.

6. A communication system comprising:
a base station; and
a mobility management entity,
the base station comprising:
a detection unit configured to detect an opportunity to release E-RABs related to mobile stations with which the base station is communicating;
a base station transmitting unit configured to transmit a single E-RAB release information message that collectively specifies the E-RABs that are detected by the detection unit to be released to the mobility management entity; and
a base station receiving unit configured to receive a single E-RAB release information acknowledge message from the mobility management entity,
the mobility management entity comprising:
a mobility management entity receiving unit configured to receive the E-RAB release information message; and
a mobility management entity transmitting unit configured to transmit, upon the mobility management entity receiving unit receiving the E-RAB release information message, the single E-RAB release information acknowledge message to the base station.

7. The communication system according to Claim 6,
wherein the base station further comprises:
a radio transmitting unit configured to command, after the base station transmitting unit having transmitted the E-RAB release information message, the mobile stations to release the respective E-RABs.

8. The communication system according to Claim 6,
wherein the mobility management entity further comprises:
an E-RAB information updating unit configured to update, after the mobility management entity receiving unit having received the E-RAB release information message, information related to the E-RABs so that the information indicates release of the E-RABs.

9. The communication system according to Claim 6,
wherein the base station transmitting unit retransmits the E-RAB release information message to the mobility management entity when the base station receiving unit does not receive the E-RAB release information acknowledge message from the mobility management entity in a predetermined amount of time after the base station transmitting unit has transmitted the E-RAB release information message to the mobility management entity.

10. The communication system according to Claim 6,
wherein the base station further comprises:
an E-RAB information updating unit configured to update, upon the base station receiving unit receiving the E-RAB release information acknowledge message, information related to the E-RABs so that the information indicates release of the E-RABs.

11. A mobility management entity comprising:
a detection unit configured to detect an opportunity to release E-RABs related to mobile stations;
a mobility management entity transmitting unit configured to transmit a single E-RAB release information message that collectively specifies the E-RABs that are detected by the detection unit to be released to a base station communicating with the mobile stations; and
a mobility management entity receiving unit configured to receive a single E-RAB release information acknowledge message from the base station.

12. A mobility management entity comprising:
a mobility management entity receiving unit configured to receive, from a base station, a single E-RAB release information message that collectively specifies E-RABs that are related to mobile stations with which the base station is communicating and are to be released; and
a mobility management entity transmitting unit configured to transmit, upon the mobility management entity receiving unit receiving the E-RAB release information message, a single E-RAB release information acknowledge message to the base station.

13. A base station comprising:
a base station receiving unit configured to receive, from a mobility management entity, a single E-RAB release information message that collectively specifies E-RABs that are related to mobile stations with which the base station is communicating and are to be released; and
a base station transmitting unit configured to transmit, upon the base station receiving unit receiving the E-RAB release information message, a single E-RAB release information acknowledge message to the mobility management entity.

14. A base station comprising:
a detection unit configured to detect an opportunity to release E-RABs related to mobile stations with which the base station is communicating;
a base station transmitting unit configured to transmit a single E-RAB release information message that collectively specifies the E-RABs that are detected by the detection unit to be released to a mobility management entity; and
a base station receiving unit configured to receive a single E-RAB release information acknowledge message from the mobility management entity.

15. A communication method comprising:
in a mobility management entity,
detecting an opportunity to release E-RABs related to mobile stations, and
transmitting a single E-RAB release information message that collectively specifies the E-RABs to be released to a base station communicating with the mobile stations; and
in the base station,
transmitting, upon receiving the E-RAB release information message, a single E-RAB release information acknowledge message to the mobility management entity.

16. A communication method comprising:
in a base station communicating with mobile stations,
detecting an opportunity to release E-RABs related to the mobile stations, and
transmitting a single E-RAB release information message that collectively specifies the E-RABs to be released to a mobility management entity; and
in the mobility management entity,
transmitting, upon receiving the E-RAB release information message, a single E-RAB release information acknowledge message to the base station.
